(19) **Europäisches Patentamt / European Patent Office / Office européen des brevets**

(11) **EP 3 950 768 A1**

(12) # EUROPEAN PATENT APPLICATION
published in accordance with Art. 153(4) EPC

(43) Date of publication:
**09.02.2022 Bulletin 2022/06**

(21) Application number: **20785227.8**

(22) Date of filing: **02.04.2020**

(51) International Patent Classification (IPC):
***C08G 63/85*** (2006.01)   ***C08G 63/16*** (2006.01)
***C08G 63/78*** (2006.01)

(52) Cooperative Patent Classification (CPC):
**C08G 63/16; C08G 63/78; C08G 63/85**

(86) International application number:
**PCT/KR2020/004498**

(87) International publication number:
**WO 2020/204620 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 05.04.2019   KR 20190040024
22.07.2019   KR 20190088118
26.03.2020   KR 20200036752

(71) Applicant: HYOSUNG TNC CORPORATION
**SEOUL, 04144 (KR)**

(72) Inventors:
• KIM, Chon Ki
  **Incheon 21350 (KR)**
• PARK, Mee So
  **Daejeon 35284 (KR)**
• KIM, Moo Song
  **Anyang-si Gyeonggi-do 14070 (KR)**

(74) Representative: **Westphal, Mussgnug & Partner
Patentanwälte mbB
Am Riettor 5
78048 Villingen-Schwenningen (DE)**

(54) **POLYESTER POLYMERIZATION CATALYST AND METHOD FOR PRODUCING POLYESTER BY USING SAME**

(57)     Disclosed are a polymerization catalyst for the production of polyester, which includes an inorganic stannous (tin (II)) compound, and a method of producing polyester using the same. The polymerization catalyst for the production of polyester is safe without toxicity, has equal or higher catalytic activity compared to an antimony-based catalyst, may increase the polymerization reaction rate, may ensure a high viscosity level even when used in small amounts, may reduce the production of acetaldehyde, and may also improve the thermal stability and color of the polymer compared to those of a polyester polymer obtained by the related art.

EP 3 950 768 A1

**Description**

**Technical Field**

The present invention relates to a polymerization catalyst for the production of polyester and a method of producing polyester using the same, and more particularly to a novel polymerization catalyst for the production of polyester, which is an environmentally friendly catalyst capable of replacing catalysts, such as antimony, that cause environmental problems, and which is capable of performing polymerization even when used in small amounts in the production of polyester, and a method of producing polyester using the same.

**Background Art**

Polyester resins have excellent mechanical and chemical properties, and have been widely used in various applications, including beverage containers, medical supplies, packaging materials, sheets, films, tire cords, and automobile molded products.

In the production of such polyester resins, catalysts are used to improve the quality or production efficiency of the resins. Polymerization catalysts for the production of polyester resins are materials that determine the quality and production efficiency of the resins, and correspond to the field of polyester resin production technology in which fierce competition for development is in progress. Currently, in terms of price and efficiency, the most commercially successful one of the polymerization catalysts for the production of polyester is an antimony-based catalyst.

However, in the case of products produced using the antimony-based catalyst, a large amount of antimony has to be used in a polymerization process, and the metal antimony itself is toxic. Hence, the products release antimony when they are used for a long period of time, and the released antimony impairs fetal growth, causes diseases such as carcinogenesis, and also causes environmental problems when it enters a living body, (Anal. Bioanal. Chem., 2006, 385, 821). According to recent research results, it is known that a large amount of antimony, which causes toxicity *in vivo,* is also detected in drinking water bottles and food packaging materials produced using the antimony-based catalyst (Environ. Sci. Technol., 2007, 41, 1560). In addition, when the antimony-based catalyst is used in an amount that causes the polymerization to proceed at a practical level, the metal antimony precipitates and causes problems in that the reduction product of the catalyst occurs in an amount of about 10 to 15% based on the amount of catalyst used or gray discoloration occurs which lowers the L value of the product. In addition, it causes process problems such as spinneret contamination, increased filtration pressure, and yarn breakage. Accordingly, developed countries have gradually restricted or banned the use of the antimony-based catalyst, and have rushed to develop environmentally friendly polymerization catalysts for the production of polyester, which can replace metals that cause toxicity, such as antimony.

Accordingly, methods have been proposed which use, as polymerization catalysts for the production of polyester, titanium metal compounds and germanium compounds which can replace highly toxic antimony-based catalysts, have low *in vivo* toxicity, and are known as environmentally friendly materials. For example, U.S. Patent Application Publication No. 2010-0184916 discloses the production of polyester using titanium, which is a representative environmentally friendly metal. However, the titanium catalyst has problems in that the degree of yellowing of the polyester resin is high, so that the color tone of the resin is not excellent, the thermal stability of the resin is not excellent, and the resin has a high oligomer content. Due to these disadvantages, the titanium catalyst has a limitation in that it is difficult to commercially apply to polyester production, despite the relatively excellent activity of the metal titanium itself.

Meanwhile, U.S. Patent No. 6,365,659 discloses the production of polyester using a mixture of germanium, aluminum and zirconium, which are environmentally friendly metals. However, although the germanium compound catalyst itself has high activity, the germanium catalyst has a problem in that when the amount of germanium catalyst used for polymerization is large, the germanium catalyst is difficult to apply commercially due to the high cost thereof.

**Disclosure**

**Technical Problem**

The present invention has been conceived to overcome the above-described problems of the related art, and an object of the present invention is to provide a polymerization catalyst for the production of polyester, which is an environmentally friendly catalyst capable of replacing heavy metal catalysts, such as antimony, that are harmful to the human body and the environment, and which is capable of exhibiting sufficient polymerization activity due to its high catalytic activity, thereby ensuring a high viscosity level even when used in small amounts.

Another object of the present invention is to provide a method of producing polyester using the catalyst of the present invention.

Still another object of the present invention is to provide polyester which can be put to practical use without substantially using an antimony-based compound as a polycondensation catalyst, contains little foreign matter, and has excellent heat resistance and color (color L).

**Technical Solution**

One aspect of the present invention for achieving the above-described objects is directed to a polymerization catalyst for the production of polyester, the polymerization catalyst including an inorganic stannous (tin (II)) compound.

Another aspect of the present invention is directed to a method of producing polyester by the polycondensation of a polymerization starting material including an esterification product of a dicarboxylic acid component and a glycol component, wherein the polymerization catalyst for the production of polyester, the polymerization catalyst including an inorganic stannous (tin (II)) compound, is used as a catalyst for the polycondensation.

Still another aspect of the present invention is directed to a polyester produced using the polymerization catalyst for the production of polyester according to the present invention.

**Advantageous Effects**

As described above, according to the present invention, since the catalyst including no heavy metal harmful to the human body and the environment is used, it may be possible to produce a polyester resin containing no component that causes environmental pollution and is harmful to the human body.

Since the polymerization catalyst for the production of polyester according to the present invention includes the inorganic stannous (tin (II)) compound, it is environmentally friendly, and has high catalytic activity, so that the amount thereof added may be reduced to about 1/5 or less compared to that of a conventional antimony catalyst. In addition, it may reduce the thermal decomposition of the polystyrene by 50% or more.

When the polymerization catalyst for the production of polyester according to the present invention is applied, the produced polyester may have improved heat resistance, so that the content of acetaldehyde resulting from decomposition of the polyester may be lowered. Also, the polycondensation reaction may be performed at a low polymerization temperature, and thus the content of cyclic oligomers may be reduced.

A product obtained using the novel polymerization catalyst for the production of polyester according to the present invention may be processed even by the same extrusion process used for a product obtained using an antimony catalyst, contains little foreign matter of the catalyst, and exhibits improved physical properties.

In addition, a polyester polymer obtained by polycondensation in the presence of the polymerization catalyst for the production of polyester according to the present invention may have a dramatically improved thermal stability and color (color L), and may also have improved processability.

**Best Mode**

A polymerization catalyst composition for the production of polyester and a polyester production method according to the present invention will be described in more detail below.

In the following description, a detailed description of a related known function or configuration incorporated herein will be omitted when it may obscure the gist of the present invention. Throughout the present specification, it is to be understood that when a part is described as "including" a component, this does not exclude one or more other components, but may further include one or more other components, unless otherwise specified.

Polymerization catalyst for the production of polyester

The polymerization catalyst for the production of polyester according to the present invention includes an inorganic stannous (tin (II)) compound. The inorganic stannous (tin (II)) compound, which is a divalent inorganic tin compound having no Sn-C bond, is preferably of a metal salt type. Such inorganic stannous (tin (II)) compounds may be used alone or in combination of two or more.

Organic compounds are excluded in the present invention because they are materials subject to strong environmental regulations, compared to the inorganic tin compounds that are used in the present invention. In addition, among the inorganic tin compounds, an inorganic stannic compound is highly stable, but has a limitation in that the catalytic activity thereof is low.

The inorganic stannous (tin (II)) compound that is used in the present invention has remarkable advantages over antimony (Sb) catalysts and inorganic stannic compound catalysts, which are used in the related art, in that it has a low standard reduction potential energy (RPE), and thus is not easily reduced during a polymerization process for the production of polyester and an extrusion (spinning and film formation) process. The inorganic stannous (tin (II)) compound catalyst that is used in the present invention does not have the problem in which it is easily reduced during the polymerization reaction, so that the activity thereof is lowered or catalyst residue is generated in the polymerization reactor due to the reduction product thereof. In addition, the inorganic stannous (tin (II)) compound catalyst generates little foreign matter on spinning packs and nozzles during an extrusion (spinning and film formation) process, resulting in improvement in processability.

| Sb (antimony) | | | Sn(tin) | | |
|---|---|---|---|---|---|
| Before | After | RPE (V) | Before | After | RPE (V) |
| 5+ | 3+ | 0.746 | 4- | 2+ | 0.150 |
| 3+ | 0 | 0.152 | 2- | 0 | -0.136 |
| | | | 4- | 0 | 0.010 |

It means that the reducibility increases as the reduction potential energy increases and the reducibility decreases as the reduction potential energy decreases. Antimony (Sb), which has been mainly used in a polymerization process for the production of polyester in the related art, has a reducing power because it has a positive reduction potential energy at an oxidation state of 3 or 5. In contrast, the inorganic stannous (tin (II)) compound that is used in the present invention has a reduction potential energy of less than 0 V at an oxidation state of 2, so that it is not spontaneously reduced and maintains its catalytic activity and makes it possible to decrease the generation of a reduction product (catalyst residue) during a polymerization process for the production of polyester and an extrusion process.

The inorganic stannous (tin (II)) compound may be divalent tin oxide, a carboxylic acid salt of divalent tin, or an alkoxide of divalent tin. Non-limiting examples of the inorganic stannous (tin (II)) compound include stannous oxide, stannous pyrophosphate, stannous phosphate, stannous tartrate, stannous acetate, stannous oxalate, stannous stearate, stannous oleate, stannous gluconate, stannous citrate, stannous (tin (II)) 2-ethylhexanoate, stannous ethoxide, stannous acetylacetonate, and stannous glycolate. In particular, the inorganic stannous (tin (II)) compound is preferably stannous oxalate, stannous acetate, or stannous glycolate.

The polymerization catalyst for the production of polyester according to the present invention may be added in any step during a polymerization process for the production of polyester. For example, it may be added only in the preparation of a slurry (EG/TPA mixture) before an esterification reaction step, or added only in the esterification reaction step, or added only in the step of polycondensing an esterification reaction product, or added in all the preparation of the slurry before the esterification reaction step, the esterification reaction step and the polycondensation step. However, in the case where polyester is produced by polycondensation of a reaction product obtained by esterification between a dicarboxylic acid component and a glycol component, the inorganic stannous (tin (II)) compound is preferably added in the step of polycondensing the esterification reaction product.

The inorganic stannous (tin (II)) compound catalyst of the present invention may be used in a polymerization process for the production of homopolyester or copolyester. In particular, when it is used in the polymerization process for the production of homopolyester, homopolyester having a high melting point and a very high molecular weight may be produced.

The inorganic stannous (tin (II)) compound catalyst may be added by adding the catalyst itself as powder to the polyester production process, by adding the catalyst as a solution, or by adding the catalyst prepared in ethylene glycol. However, when the catalyst is added as a solution in ethylene glycol, it may be added to stannous glycolate obtained by reacting the inorganic stannous (tin (II)) compound with ethylene glycol.

An antimony-based catalyst, which is commonly used as a polymerization polymer for the production of polyester, has low catalytic activity, and hence is used in an amount of 50 ppm to 500 ppm (as Sb) based on polyester. In contrast, the inorganic stannous (tin (II)) compound, which is newly applied in the present invention, is capable of sufficiently ensuring the same polycondensation reactivity even when used in a small amount of 10 ppm to 200 ppm (as Sn), preferably 10 ppm to 100 ppm (as Sn). Due to this low content of the catalyst, the content of foreign matter of the catalyst in the produced polyester may be reduced, and the generation of foreign matter by the reduction product of the catalyst in an extrusion process (spinning and film formation) may be reduced, so that foreign matter on dies may be reduced. In addition, if a catalyst is used at a high concentration, a phenomenon may occur in which polyester resin becomes greyish. However, in the present invention, it is possible to obtain a remarkable effect of improving the color (color L) of the polyester polymer and the product due to the low content of the catalyst.

Furthermore, when the catalyst of the present invention is applied, the heat resistance of the produced polyester may be improved, so that the content of acetaldehyde resulting from decomposition of the polyester may be lowered. Also, the polycondensation reaction may be performed at a low polymerization temperature, and thus the content of cyclic oligomers may be reduced.

Unlike the antimony-based catalyst, the catalyst of the present invention is unlikely to cause problems to the human health and the environment because the toxicity of the metal itself is relatively low. In addition, even when the catalyst of the present is used in small amounts, it exhibits high activity within a short reaction time. Furthermore, the polyester produced using the catalyst of the present invention has excellent physical properties such as viscosity and color. Accordingly, the catalyst of the present invention may be commercially useful for the mass production of polyester, particularly the production of polyethylene terephthalate.

Another aspect of the present invention is directed to a composition for the production of polyester containing, as a polymerization catalyst, the above-described inorganic stannous (tin (II)) compound including a tin metal that has a valence of +2 and a standard reduction potential energy of 0 V or less. Preferably, the composition for the production of polyester according to the present invention is a composition for the production of homopolyester. The composition for the production of polyester according to the present invention may be advantageously used for the production of homopolyester having a high melting point, a very high molecular weight and a low melt flow index.

The composition may contain the inorganic stannous (tin (II)) compound in an amount of 10 ppm to 200 ppm.

The composition for the production of polyester according to the present invention may, if necessary, further contain an antioxidant, a UV blocking agent, an antistatic agent, a flame retardant, a surfactant, etc.

A method of preparing the composition for the production of polyester according to the present invention is not particularly limited, and may be performed according to a method that is commonly used in the technical field to which the present invention pertains. For example, it may be performed batch-wise or continuously, but is not particularly limited thereto.

Polyester Production Method

Still another aspect of the present invention is directed to a polyester production method. The polyester production method includes the step of polymerizing a dicarboxylic acid component with a glycol component in the presence of a catalyst composition including the inorganic stannous (tin (II)) compound. As used herein, the term "polymerization" refers to both homopolymerization and copolymerization, and the term "copolymerization" includes terpolymerization or copolymerization of three or more different monomers.

The inorganic stannous (tin (II)) compound of the present invention may be used for the production of homopolyester or copolyester. In particular, when it is used for the production of homopolyester, it may produce homopolyester having a high melting point and a very high molecular weight. In addition, the inorganic stannous (tin (II)) compound of the present invention has a very high catalytic activity and exhibits a high excellent productivity.

According to one embodiment of the present invention, the step of polymerizing the dicarboxylic acid component with the glycol component may include the steps of: subjecting the dicarboxylic acid component and the glycol component to an esterification reaction; and polycondensing the product of the esterification reaction. In the esterification reaction step, an oligomer may be obtained by a transesterification reaction. Next, organic polymer particles and various additives may be added, and then the inorganic stannous (tin (II)) compound as a polycondensation catalyst may be added, followed by a polycondensation reaction, thereby obtaining a high-molecular-weight polyester.

More specifically, the dicarboxylic acid component and the glycol component are first subjected to an esterification reaction. According to one embodiment of the present invention, examples of the dicarboxylic acid component include, but are not necessarily limited to, terephthalic acid, oxalic acid, malonic acid, azelaic acid, fumaric acid, pimelic acid, suberic acid, isophthalic acid, dodecane dicarboxylic acid, naphthalene dicarboxylic acid, biphenyl dicarboxylic acid, 1,4-cyclohexane dicarboxylic acid, 1,3-cyclohexane dicarboxylic acid, succinic acid, glutaric acid, adipic acid, sebacic acid, 2,6-naphthalene dicarboxylic acid, 1,2-norbornane dicarboxylic acid, 1,3-cyclohexane dicarboxylic acid, 1,4-cyclohexane dicarboxylic acid, 1,3-cyclobutane dicarboxylic acid, 1,4-cyclohexane dicarboxylic acid, 5-sodium sulfoisophthalic acid, 5-potassium sulfoisophthalic acid, 5-lithium sulfoisophthalic acid, and 2-sodium sulfoterephthalic acid. In addition to the dicarboxylic acids described above, other dicarboxylic acids not exemplified above may also be used within a range that does not impair the object of the present invention. According to one embodiment of the present invention, terephthalic acid may preferably be used as the dicarboxylic acid component.

According to one embodiment of the present invention, examples of the glycol component include, but are not necessarily limited to, ethylene glycol, 1,2-propylene glycol, 1,2-butylene glycol, 1,3-butylene glycol, 2,3-butylene glycol, 1,4-butylene glycol, 1,5-pentanediol, neopentyl glycol, 1,3-propylene glycol, diethylene glycol, triethylene glycol, 1,2-cyclohexane diol, 1,3-cyclohexane diol, 1,4-cyclohexane diol, propane diol, 1,6-hexanediol, neopentyl glycol, tetramethylcyclobutane diol, 1,4-cyclohexane diethanol, 1,10-decamethylene glycol, 1,12-dodecane diol, polyoxyethylene glycol, polyoxymethylene glycol, polyoxytetramethylene glycol, and glycerol. In addition, other glycols may also be used within a range that does not impair the object of the present invention. Preferably, ethylene glycol may be used as the glycol component.

According to one embodiment of the present invention, the step of subjecting the dicarboxylic acid component and the glycol component to the esterification reaction may be performed at a temperature of about 200°C to about 300°C, preferably about 230°C to about 280°C, for about 1 hour to about 6 hours, preferably about 2 hours to about 5 hours.

Then the product of the esterification reaction is polycondensed. The step of polycondensing the product of the esterification reaction may be performed at a temperature of about 200°C to about 300°C, preferably about 260°C about 290°C, under a reduced pressure of about 0.1 Torr to about 1 Torr, for about 1 hour to about 3 hours, preferably about 1 hour and 30 minutes to about 2 hours and 30 minutes.

The inorganic stannous (tin (II)) compound catalyst of the present invention may be added during slurry preparation before the esterification reaction, during the esterification reaction, or before the polycondensation step after the esterification reaction. However, when the inorganic stannous (tin (II)) compound catalyst of the present invention is added during the esterification reaction, the effect of improving the esterification reaction is obtained, but the effect of shortening the polycondensation time is low, and a problem may arise in that the content of the by-product diethylene glycol (DEG) increases somewhat. For this reason, in the present invention, it is preferred to add the catalyst in the step of polycondensing the product after the esterification reaction. By doing so, the productivity may be improved by significantly shortening the polycondensation time compared to the case where a conventional catalyst is used.

In the polyester production method according to the present invention, the inorganic stannous (tin (II)) compound catalyst may be used in an amount of about 200 ppm or less (as tin contained in the catalyst), for example, about 10 to about 200 ppm (as tin), preferably about 10 ppm to about 100 ppm (as tin), based on the weight of the finally produced polyester.

If the inorganic stannous (tin (II)) compound catalyst of the present invention is used in the polycondensation in an amount of less than 10 ppm (as tin) based on the weight of the final polyester, a problem may arise in that the activity of the catalyst is lowered, so that the reaction time becomes longer and polyester having low viscosity is produced. If the inorganic stannous (tin (II)) compound catalyst is used in an amount of more than 200 ppm (as tin), it may cause foreign matter generation due to insoluble precipitates or cause deterioration of color tone due to residual metal ions.

According to the present invention, as the inorganic stannous (tin (II)) compound is used, the polycondensation reaction may be performed even when the catalyst is used in small amounts. In addition, a product having high viscosity may be obtained within a short reaction time. Since the amount of catalyst used may be reduced as described above, it is possible to improve the color tone of the polyester resin produced after polymerization by reducing the greyish discoloration of the polyester resin and to obtain the polyester resin with increased viscosity. Thus, the catalyst of the present invention is industrially considerably advantageous.

In general, polyester has a high softening point. Hence, when a processed article is produced using polyester resin, the polyester resin tends to be decomposed to produce acetaldehyde in a high-temperature processing process. Acetaldehyde has a pronounced taste, and hence adversely affects the flavor and aroma of food when used in a foodrelated product. When the polymerization catalyst for the production of polyester according to the present invention is applied, the produced polyester may have improved heat resistance, so that the production of acetaldehyde from the produced polyester may be reduced.

According to the polyester production method of the present invention, the polyester may be formed by liquid phase polymerization, and the formed polyester may have an intrinsic viscosity ranging from about 0.50 dl/g to about 0.70 dl/g. Meanwhile, according to the polyester production method of the present invention, the polyester may be formed by solid phase polymerization, and the formed polyester may have an intrinsic viscosity ranging from about 0.70 dl/g to about 1.3 dl/g.

Polyester Product

Still another aspect of the present invention is directed to polyester produced by the production method of the present invention using the polymerization catalyst for the production of polyester according to the present invention. Specific examples of such polyesters include polyethylene terephthalate, polytrimethylene terephthalate, polytetramethylene terephthalate, polycyclohexylenedimethylene terephthalate, polyethylene-2,6-naphthalenedicarboxylate, polyethylene-1,2-bis(2-chlorophenoxy) ethane-4,4'-dicarboxylate, and the like.

The present invention will be described in more detail below with reference to examples. However, these examples are merely provided to illustrate the present invention, and the scope of the present invention is not limited thereto.

Examples

Preparation Example 1

5 g of an inorganic stannous (tin (II)) compound catalyst was diluted in ethylene glycol to reach a total weight of 2 kg, and stirred at a stirring speed of 400 rpm, thereby preparing the inorganic stannous (tin (II)) compound catalyst in ethylene glycol at a concentration of 0.25%. Then the catalyst prepared in ethylene glycol was allowed to react in a reflux reactor at a temperature of 160 to 180°C for 2 hours to produce an inorganic stannous (tin (II)) compound catalyst solution.

Comparative Preparation Example 1

40 g of antimony was dissolved in ethylene glycol to reach a total weight of 2 kg, and stirred at a speed of 400 rpm, thereby preparing a catalyst solution. The catalyst solution was allowed to react in a reflux reactor at a temperature of 180 to 190°C for 2 hours to produce an antimony glycolate solution.

Example 1

7.8 kg of terephthalic acid (TPA) and 3.3 kg of ethylene glycol (EG) were prepared into a slurry (EG/TPA molar ratio = 1.13). The slurry was introduced into an esterification reactor in a semi-batch manner, and allowed to react at atmospheric pressure under a nitrogen atmosphere until the reaction temperature reached 265°C, thereby producing a polyester oligomer. In the esterification reaction, the slurry was introduced at a temperature of 253°C, the final esterification reaction was completed at a temperature of 265°C, and the reaction was performed for about 3 hours and 30 minutes.
The polyethylene terephthalate oligomer was transferred into a polycondensation reactor, and a stannous oxide catalyst was added thereto in an amount of 200 ppm based on the finally produced polyethylene terephthalate. Next, polycondensation of the polyethylene terephthalate oligomer was performed under a high vacuum over about 2 hours and 30 minutes until the reaction temperature reached 288°C.
After completion of the polycondensation reaction, the reaction product was solidified with cooling water to obtain a polyethylene terephthalate polymer having an intrinsic viscosity (IV) of about 0.60 to 0.65 dl/g.

Examples 2 to 70

Polyester polymers were produced in the same manner as Example 1 except that inorganic stannous (tin (II)) compounds shown in Table 1 below were used as catalysts in an amount of 10 to 200 ppm.

Comparative Example 1

A polyester polymer was produced in the same manner as Example 1 except that no catalyst was used.

Comparative Example 2

A polyester polymer was produced in the same manner as Example 1 except that the antimony catalyst solution prepared in Comparative Preparation Example 1 was used as a catalyst.

Comparative Examples 3 to 7

Polyester polymers were produced in the same manner as Example 1 except that antimony catalyst solutions shown in Table 1 below were used as catalysts.

Comparative Examples 8 to 43

Polyester polymers were produced in the same manner as Example 1 except that inorganic stannic (tin (IV)) compounds shown in Table 1 below were used as catalysts.

Comparative Example 44 to 85

Polyester polymers were produced in the same manner as Example 1 except that inorganic stannous (tin (II)) compounds shown in Table 1 below were used as catalysts in an amount of 1 ppm or 500 ppm.

Test Example

The physical properties of the polyester polymers produced according to Examples 1 to 70 and Comparative Examples 44 to 85 above were evaluated in the following manner, and the results of the evaluation are shown in Table 1 below. The physical properties of the polyester polymers produced according to Comparative Examples 1 to 43 above were evaluated in the same manner, and the results of the evaluation are shown in Table 1 below. In Table 1 below, the content of each catalyst is given on a metal basis.

(1) Intrinsic Viscosity

According to ASTM D 4603, 0.1 g of a sample was dissolved in a reagent (raw chip 90°C; SSP 130°C), obtained by mixing phenol and 1,1,2,2-tetrachloroethanol at a weight ratio of 6:4, to a concentration of 0.4 g/100 ml for 90 minutes, and then the solution was placed in an Ubbelohde viscometer and kept in a constant-temperature bath at 30°C for 10 minutes, and the number of seconds during which the sample solution drops was measured using the viscometer and an aspirator. After the number of seconds during which the solvent drops was also measured in the same manner, the relative viscosity (R.V.) and intrinsic viscosity (I.V.) values were calculated using Equations 1 and 2 below.

```
<Equation 1>

R.V. = the number of seconds during which sample
solution drops/the number of seconds during which solvent
drops
```

```
<Equation 2>

I.V. = 1/4 × [(R.V.-1)/C] + 3/4 × (lnR.V./C)

wherein C represents the concentration of the sample in the
solution (g/100 ml).
```

(2) Carboxyl End Groups (CEG) Concentration

According to ASTM D 7409, a sample was dissolved in o-cresol, and then analyzed using acid-base neutralization titration. Specifically, about 0.2 g of a sample was taken and 10 ml of benzyl alcohol was added thereto. Then the sample was dissolved by heating in a heating block at 200°C for 10 minutes, and then cooled in a water bath for 1 minute. Then, 100 ml of phenol red and several drops of phenolphthalein indicator were added dropwise to the solution, followed by titration using 0.02 N KOH (or NaOH). Based on the titration amount, the carboxyl end groups (CEG) concentration was calculated according to Equation 3 below. The number of carboxyl groups is expressed as meq of carboxyl end groups/kg of polymer.

```
<Equation 3>

CEG = (A-B) × 0.02 × 1000/W
```

A: ml consumed for sample; B: blank; W: sample weight

(3) Diethylene Glycol (DEG) Concentration

Aminolysis with monoethanolamine was performed, followed by analysis by gas chromatography. Specifically, 1 g of a PET sample was taken, and 3 ml of monoethanolamine was added thereto. Then the sample was completely decomposed by heating on a hot plate equipped with a cooling device. After cooling, 20 ml of MeOH containing an internal standard (1,6-hexanediol), and 10 g of terephthalic acid (TPA) were added to the sample solution, followed by analysis by gas chromatography. The DEG standard calibration curve was plotted using MeOH solutions containing the same internal standard and having DEG contents of 0, 0.5, 1.0 and 1.5%.

(4) Acetaldehyde Content of Polymer

According to ASTM F 2013, a frozen crushed polyester sample was placed in a headspace sampler vial, sealed, then extracted with hot water at 160°C for 2 hours, and then analyzed by gas chromatography GC (Agilent 7890).

(5) Color Measurement (Color L)

Using a color difference meter (Color view-9000 manufactured by BYK Gardner), the color L value was measured under a D65 light source at an angle of 10°°. The L value measured by the spectrophotometer is a colorimetric value calculated from the CIE 1976 CIE Lab color space after measuring the reflectance of each sample.

Table 1

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| No catalyst was used | | Comparative Example 1 | 0 | 610 | 0.389 | 68 | 1.61 | 315 | 61.5 |
| Comparative Examples (Antimony) | 1.Antimony triglycolate (P) P = Powder | Comparative Example 2 | 500 | 110 | 0.618 | 29 | 0.89 | 168 | 51.3 |
| | | Comparative Example 3 | 200 | 144 | 0.618 | 28 | 0.91 | 188 | 55.6 |
| | | Comparative Example 4 | 100 | 342 | 0.521 | 47 | 1.51 | 254 | 57.8 |
| | | Comparative Example 5 | 40 | 516 | 0.423 | 48 | 1.52 | 216 | 57.8 |
| | | Comparative Example 6 | 10 | 730 | 0.387 | 49 | 1.56 | 288 | 58.4 |
| | | Comparative Example 7 | 1 | 725 | 0.397 | 51 | 1.59 | 297 | 60.4 |
| Comparative Examples (Tin (IV), Stannic) | 2.Tin oxide (P) | Comparative Example 8 | 500 | 146 | 0.612 | 36 | 1.40 | 145 | 54.6 |
| | | Comparative Example 9 | 200 | 168 | 0.618 | 41 | 1.41 | 178 | 55.6 |
| | | Comparative Example 10 | 100 | 305 | 0.611 | 51 | 1.58 | 196 | 57.8 |
| | | Comparative Example 11 | 40 | 486 | 0.621 | 54 | 1.54 | 206 | 57.4 |
| | | Comparative Example 12 | 10 | 601 | 0.604 | 62 | 1.62 | 246 | 57.9 |
| | | Comparative Example 13 | 1 | 712 | 0.421 | 61 | 1.59 | 268 | 56.1 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 3.Tin fluoride (P) | Comparative Example 14 | 500 | 168 | 0.621 | 34 | 1.26 | 98 | 51.2 |
| | | Comparative Example 15 | 200 | 215 | 0.613 | 36 | 1.38 | 145 | 53.4 |
| | | Comparative Example 16 | 100 | 316 | 0.619 | 41 | 1.40 | 168 | 54.6 |
| | | Comparative Example 17 | 40 | 406 | 0.621 | 45 | 1.51 | 199 | 55.9 |
| | | Comparative Example 18 | 10 | 598 | 0.609 | 48 | 1.55 | 216 | 57.1 |
| | | Comparative Example 19 | 1 | 678 | 0.416 | 51 | 1.49 | 298 | 56.9 |
| | 4.Tin sulfate (L) L = Liquid | Comparative Example 20 | 500 | 178 | 0.618 | 41 | 1.39 | 178 | 52.6 |
| | | Comparative Example 21 | 200 | 188 | 0.622 | 45 | 1.47 | 198 | 53.4 |
| | | Comparative Example 22 | 100 | 346 | 0.618 | 46 | 1.50 | 219 | 55.6 |
| | | Comparative Example 23 | 40 | 365 | 0.611 | 51 | 1.59 | 234 | 57.6 |
| | | Comparative Example 24 | 10 | 549 | 0.609 | 56 | 1.61 | 289 | 58.1 |
| | | Comparative Example 25 | 1 | 698 | 0.415 | 60 | 1.60 | 304 | 58.4 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 5.Tin isopropoxide (L) | Comparative Example 26 | 500 | 164 | 0.614 | 46 | 1.38 | 108 | 56.3 |
| | | Comparative Example 27 | 200 | 215 | 0.616 | 48 | 1.46 | 126 | 53.6 |
| | | Comparative Example 28 | 100 | 349 | 0.620 | 49 | 1.56 | 145 | 55.4 |
| | | Comparative Example 29 | 40 | 405 | 0.614 | 53 | 1.49 | 159 | 54.6 |
| | | Comparative Example 30 | 10 | 594 | 0.608 | 55 | 1.50 | 187 | 57.6 |
| | | Comparative Example 31 | 1 | 732 | 0.415 | 58 | 1.59 | 245 | 57.9 |
| | 6.Tin acetate (P) | Comparative Example 32 | 500 | 135 | 0.619 | 39 | 1.37 | 149 | 54.6 |
| | | Comparative Example 33 | 200 | 186 | 0.622 | 42 | 1.41 | 156 | 54.6 |
| | | Comparative Example 34 | 100 | 315 | 0.621 | 46 | 1.48 | 176 | 56.2 |
| | | Comparative Example 35 | 40 | 468 | 0.618 | 48 | 1.49 | 199 | 57.9 |
| | | Comparative Example 36 | 10 | 569 | 0.615 | 49 | 1.53 | 234 | 59.4 |
| | | Comparative Example 37 | 1 | 648 | 0.402 | 51 | 1.55 | 248 | 58.1 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 7.Tin oxalate (P) | Comparative Example 38 | 500 | 139 | 0.619 | 39 | 1.46 | 145 | 54.6 |
| | | Comparative Example 39 | 200 | 191 | 0.623 | 40 | 1.35 | 161 | 55.9 |
| | | Comparative Example 40 | 100 | 304 | 0.622 | 47 | 1.46 | 204 | 57.4 |
| | | Comparative Example 41 | 40 | 415 | 0.615 | 49 | 1.48 | 226 | 58.9 |
| | | Comparative Example 42 | 10 | 548 | 0.617 | 51 | 1.54 | 240 | 57.6 |
| | | Comparative Example 43 | 1 | 678 | 0.489 | 56 | 1.59 | 248 | 59.4 |
| | 1.Tin oxide (P) | Comparative Example 44 | 500 | 118 | 0.623 | 29 | 1.61 | 64 | 52.6 |
| | | Example 1 | 200 | 128 | 0.618 | 31 | 1.01 | 94 | 53.6 |
| | | Example 2 | 100 | 178 | 0.614 | 41 | 1.34 | 156 | 57.8 |
| | | Example 3 | 40 | 194 | 0.620 | 41 | 1.40 | 164 | 58.4 |
| | | Example 4 | 20 | 205 | 0.621 | 41 | 1.41 | 171 | 59.4 |
| | | Example 5 | 10 | 356 | 0.621 | 48 | 1.46 | 197 | 60.7 |
| | | Comparative Example 45 | 8 | 406 | 0.576 | 51 | 1.51 | 194 | 61.1 |
| | | Comparative Example 46 | 1 | 613 | 0.556 | 61 | 1.56 | 193 | 61.2 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| Tin(II), Stannous | 2.Tin pyrophosphate (P) | Comparative Example 47 | 500 | 89 | 0.623 | 27 | 1.64 | 84 | 54.3 |
| | | Example 6 | 200 | 96 | 0.628 | 31 | 1.51 | 91 | 55.6 |
| | | Example 7 | 100 | 116 | 0.618 | 34 | 1.34 | 99 | 57.8 |
| | | Example 8 | 40 | 131 | 0.620 | 35 | 1.26 | 104 | 57.6 |
| | | Example 9 | 20 | 159 | 0.621 | 35 | 1.28 | 108 | 58.6 |
| | | Example 10 | 10 | 246 | 0.617 | 41 | 1.48 | 165 | 59.1 |
| | | Comparative Example 48 | 8 | 403 | 0.549 | 45 | 1.42 | 170 | 59.8 |
| | | Comparative Example 49 | 1 | 598 | 0.537 | 54 | 1.42 | 178 | 60.4 |
| | 3.Tin phosphate (P) | Comparative Example 50 | 500 | 94 | 0.623 | 29 | 1.58 | 61 | 51.6 |
| | | Example 11 | 200 | 106 | 0.619 | 32 | 0.99 | 79 | 54.3 |
| | | Example 12 | 100 | 189 | 0.623 | 29 | 1.31 | 106 | 56.8 |
| | | Example 13 | 40 | 215 | 0.618 | 38 | 1.49 | 146 | 59.1 |
| | | Example 14 | 20 | 238 | 0.618 | 38 | 1.50 | 150 | 58.9 |
| | | Example 15 | 10 | 378 | 0.619 | 43 | 1.48 | 154 | 57.8 |
| | | Comparative Example 51 | 8 | 441 | 0.576 | 41 | 1.48 | 160 | 58.8 |
| | | Comparative Example 52 | 1 | 597 | 0.567 | 39 | 1.49 | 168 | 60.3 |

EP 3 950 768 A1

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 4.Tin tartrate (P) | Comparative Example 53 | 500 | 81 | 0.609 | 30 | 1.46 | 78 | 53.6 |
| | | Example 16 | 200 | 91 | 0.616 | 33 | 1.48 | 81 | 53.6 |
| | | Example 17 | 100 | 198 | 0.615 | 43 | 1.21 | 106 | 54.8 |
| | | Example 18 | 40 | 216 | 0.621 | 42 | 1.00 | 112 | 58.6 |
| | | Example 19 | 20 | 235 | 0.620 | 42 | 1.01 | 123 | 59.4 |
| | | Example 20 | 10 | 367 | 0.611 | 51 | 1.51 | 181 | 60.1 |
| | | Comparative Example 54 | 8 | 463 | 0.599 | 51 | 1.51 | 199 | 60.7 |
| | | Comparative Example 55 | 1 | 642 | 0.578 | 47 | 1.42 | 216 | 61.3 |
| | 5.Tin acetate (P) | Comparative Example 56 | 500 | 74 | 0.616 | 30 | 1.39 | 100 | 53.4 |
| | | Example 21 | 200 | 76 | 0.615 | 28 | 1.38 | 95 | 57.1 |
| | | Example 22 | 100 | 84 | 0.611 | 28 | 1.24 | 114 | 57.6 |
| | | Example 23 | 40 | 90 | 0.621 | 30 | 1.41 | 129 | 58.7 |
| | | Example 24 | 20 | 106 | 0.622 | 31 | 1.41 | 135 | 59.1 |
| | | Example 25 | 10 | 226 | 0.626 | 40 | 1.48 | 159 | 61.2 |
| | | Comparative Example 57 | 8 | 391 | 0.578 | 41 | 1.50 | 162 | 60.7 |
| | | Comparative Example 58 | 1 | 562 | 0.547 | 43 | 1.53 | 172 | 56.3 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 6.Tin oxalate (P) | Comparative Example 59 | 500 | 80 | 0.623 | 28 | 1.46 | 50 | 54.8 |
| | | Example 26 | 200 | 86 | 0.619 | 27 | 1.47 | 48 | 57.6 |
| | | Example 27 | 100 | 95 | 0.621 | 28 | 1.41 | 54 | 58.4 |
| | | Example 28 | 40 | 113 | 0.623 | 27 | 1.02 | 54 | 60.1 |
| | | Example 29 | 20 | 131 | 0.622 | 28 | 1.03 | 45 | 60.4 |
| | | Example 30 | 10 | 218 | 0.618 | 28 | 1.04 | 33 | 59.4 |
| | | Comparative Example 60 | 8 | 387 | 0.591 | 32 | 1.07 | 56 | 57.4 |
| | | Comparative Example 61 | 1 | 543 | 0.554 | 34 | 1.15 | 78 | 54.1 |
| | 7.Tin stearate (P) | Comparative Example 62 | 500 | 91 | 0.626 | 27 | 1.54 | 61 | 53.2 |
| | | Example 31 | 200 | 94 | 0.615 | 29 | 1.21 | 83 | 55.6 |
| | | Example 32 | 100 | 165 | 0.613 | 38 | 1.51 | 145 | 58.6 |
| | | Example 33 | 40 | 216 | 0.621 | 39 | 1.51 | 169 | 60.3 |
| | | Example 34 | 20 | 238 | 0.619 | 39 | 1.50 | 154 | 60.1 |
| | | Example 35 | 10 | 384 | 0.609 | 45 | 1.56 | 209 | 61.4 |
| | | Comparative Example 63 | 8 | 425 | 0.587 | 48 | 1.50 | 209 | 59.8 |
| | | Comparative Example 64 | 1 | 559 | 0.563 | 51 | 1.48 | 216 | 56.4 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 8.Tin oleate (P) | Comparative Example 65 | 500 | 81 | 0.618 | 28 | 1.35 | 63 | 55.3 |
| | | Example 36 | 200 | 91 | 0.618 | 28 | 1.41 | 85 | 57.1 |
| | | Example 37 | 100 | 159 | 0.611 | 38 | 1.47 | 126 | 58.6 |
| | | Example 38 | 40 | 215 | 0.615 | 41 | 1.41 | 158 | 61.2 |
| | | Example 39 | 20 | 234 | 0.618 | 42 | 1.42 | 168 | 60.9 |
| | | Example 40 | 10 | 364 | 0.614 | 51 | 1.56 | 189 | 60.8 |
| | | Comparative Example 66 | 8 | 431 | 0.599 | 52 | 1.57 | 199 | 54.7 |
| | | Comparative Example 67 | 1 | 586 | 0.587 | 54 | 1.61 | 205 | 54.6 |
| | 9.Tin gluconate (P) | Comparative Example 68 | 500 | 94 | 0.621 | 31 | 1.54 | 61 | 54.6 |
| | | Example 41 | 200 | 105 | 0.620 | 32 | 1.48 | 105 | 55.6 |
| | | Example 42 | 100 | 129 | 0.619 | 32 | 1.31 | 89 | 58.6 |
| | | Example 43 | 40 | 151 | 0.624 | 36 | 1.25 | 91 | 59.4 |
| | | Example 44 | 20 | 178 | 0.622 | 36 | 1.26 | 101 | 60.1 |
| | | Example 45 | 10 | 375 | 0.611 | 38 | 1.26 | 168 | 60.1 |
| | | Comparative Example 69 | 8 | 461 | 0.588 | 40 | 1.30 | 179 | 58.1 |
| | | Comparative Example 70 | 1 | 604 | 0.546 | 41 | 1.31 | 201 | 56.8 |

EP 3 950 768 A1

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 10.Tin citrate (P) | Comparative Example 71 | 500 | 99 | 0.621 | 28 | 1.47 | 64 | 56.4 |
| | | Example 46 | 200 | 104 | 0.619 | 28 | 1.21 | 72 | 56.8 |
| | | Example 47 | 100 | 201 | 0.612 | 39 | 1.16 | 136 | 57.9 |
| | | Example 48 | 40 | 304 | 0.611 | 41 | 1.21 | 159 | 58.9 |
| | | Example 49 | 20 | 315 | 0.614 | 41 | 1.26 | 170 | 59.1 |
| | | Example 50 | 10 | 398 | 0.623 | 41 | 1.51 | 184 | 59.4 |
| | | Comparative Example 72 | 8 | 446 | 0.576 | 54 | 1.50 | 190 | 57.6 |
| | | Comparative Example 73 | 1 | 547 | 0.546 | 58 | 1.49 | 198 | 56.4 |
| | 11.Tin2-ethylhexanoate (L) | Comparative Example 74 | 500 | 121 | 0.621 | 31 | 1.35 | 81 | 53.2 |
| | | Example 51 | 200 | 134 | 0.620 | 32 | 1.36 | 75 | 55.6 |
| | | Example 52 | 100 | 189 | 0.619 | 37 | 1.26 | 103 | 56.8 |
| | | Example 53 | 40 | 231 | 0.623 | 40 | 1.19 | 116 | 57.9 |
| | | Example 54 | 20 | 256 | 0.621 | 40 | 1.20 | 124 | 58.4 |
| | | Example 55 | 10 | 398 | 0.617 | 41 | 1.36 | 164 | 58.9 |
| | | Comparative Example 75 | 8 | 521 | 0.578 | 46 | 1.40 | 171 | 56.8 |
| | | Comparative Example 76 | 1 | 601 | 0.531 | 48 | 1.40 | 189 | 54.3 |

EP 3 950 768 A1

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 12.Tin ethoxide (P) | Comparative Example 77 | 500 | 106 | 0.622 | 27 | 1.48 | 88 | 54.3 |
| | | Example 56 | 200 | 140 | 0.624 | 29 | 1.41 | 96 | 56.9 |
| | | Example 57 | 100 | 189 | 0.619 | 32 | 1.29 | 94 | 58.9 |
| | | Example 58 | 40 | 206 | 0.617 | 36 | 1.21 | 124 | 60.8 |
| | | Example 59 | 20 | 223 | 0.622 | 36 | 1.23 | 130 | 60.9 |
| | | Example 60 | 10 | 366 | 0.620 | 36 | 1.31 | 145 | 61.2 |
| | | Comparative Example 78 | 8 | 450 | 0.567 | 40 | 1.44 | 201 | 58.4 |
| | | Comparative Example 79 | 1 | 645 | 0.531 | 42 | 1.46 | 206 | 57.3 |
| | 13.Tin acetylacetonate (L) | Comparative Example 80 | 500 | 119 | 0.608 | 29 | 1.34 | 119 | 51.3 |
| | | Example 61 | 200 | 146 | 0.603 | 33 | 1.29 | 134 | 53.7 |
| | | Example 62 | 100 | 214 | 0.615 | 35 | 1.29 | 141 | 55.6 |
| | | Example 63 | 40 | 255 | 0.618 | 36 | 1.18 | 184 | 59.1 |
| | | Example 64 | 20 | 274 | 0.620 | 36 | 1.20 | 191 | 59.2 |
| | | Example 65 | 10 | 342 | 0.614 | 36 | 1.34 | 206 | 58.7 |
| | | Comparative Example 81 | 8 | 463 | 0.556 | 41 | 1.40 | 230 | 27.1 |
| | | Comparative Example 82 | 1 | 547 | 0.512 | 41 | 1.41 | 245 | 56.4 |

| Kind of catalyst | | Examples | Content (ppm as metal) | Polyconden sation time (min) | IV (dl/g) | CEG (meq/kg) | DEG (wt%) | Acetaldehyde (ppm) | Color L |
|---|---|---|---|---|---|---|---|---|---|
| | 14.Tin glycolate (P, L) | Comparative Example 83 | 500 | 80 | 0.613 | 28 | 1.34 | 56 | 56.1 |
| | | Example 66 | 200 | 92 | 0.622 | 29 | 1.27 | 60 | 57.9 |
| | | Example 67 | 100 | 101 | 0.622 | 29 | 1.21 | 62 | 58.8 |
| | | Example 68 | 40 | 116 | 0.631 | 28 | 1.16 | 71 | 60.1 |
| | | Example 69 | 20 | 126 | 0.626 | 29 | 1.16 | 81 | 61.8 |
| | | Example 70 | 10 | 207 | 0.617 | 36 | 1.42 | 113 | 62.8 |
| | | Comparative Example 84 | 8 | 422 | 0.584 | 36 | 1.43 | 119 | 60.1 |
| | | Comparative Example 85 | 1 | 564 | 0.553 | 38 | 1.51 | 120 | 58.4 |

EP 3 950 768 A1

Referring to Table 1 above, it can be seen that the physical properties (color L, CEG concentration, DEG concentration, and heat resistance) of the polyethylene terephthalates produced in Examples 1 to 70 were equal to or better than those in Comparative Examples in which the antimony catalyst was used. In addition, in the case of Comparative Examples 8 to 43 in which the inorganic stannous (tin (II)) compound was used, the polycondensation time was longer and the content of acetaldehyde was higher than those for the catalyst compositions of Examples 1 to 70. Accordingly, it can be seen that the inorganic stannous (tin (II)) compound of the present invention is highly active as a polymerization catalyst for the production of polyester and thus can shorten the polymerization time, and the polyester produced using the same exhibits a high intrinsic viscosity.

Although the present invention has been described above in conjunction with the limited embodiments, the present invention is not limited thereto. It will be apparent that various modifications and alternations may be made to the present invention by those having ordinary skill in the art to which the present invention pertains. Therefore, the true scope of the present invention should be defined in the claims and the equivalents to the claims.

## Claims

1. A polymerization catalyst for production of polyester, the polymerization catalyst comprising an inorganic stannous (tin (II)) compound.

2. The polymerization catalyst of claim 1, wherein the inorganic stannous (tin (II)) compound is selected from the group consisting of stannous oxide, stannous pyrophosphate, stannous phosphate, stannous tartrate, stannous acetate, stannous oxalate, stannous stearate, stannous oleate, stannous gluconate, stannous citrate, stannous 2-ethylhexanoate, stannous ethoxide, stannous acetylacetonate, and stannous glycolate.

3. The polymerization catalyst of claim 1, which is a polymerization catalyst for production of homopolyester.

4. A composition for production of polyester, the composition comprising the polymerization catalyst set forth in claim 1 or 2.

5. The composition of claim 4, which comprises the inorganic stannous (tin (II)) compound in an amount of 10 ppm to 200 ppm.

6. The composition of claim 4, which is a composition for production of homopolyester.

7. A method of producing polyester by polycondensation of a polymerization starting material comprising an esterification product of a dicarboxylic acid component and a glycol component, wherein the polymerization catalyst for production of polyester, set forth in claim 1 or 2, is used as a catalyst for the polycondensation.

8. The method of claim 7, wherein the polyester is homopolyester.

9. The method of claim 7, wherein the polymerization catalyst for production of polyester is added during slurry preparation before an esterification reaction, is added during the esterification reaction, or is added during the polycondensation after the esterification reaction.

10. The method of claim 7, wherein the polymerization catalyst for production of polyester, the polymerization catalyst comprising an inorganic stannous (tin (II)) compound, set forth in claim 1 or 2, is added as powder to a polymerization process for production of polyester or is added as a catalyst solution to the polymerization process.

11. The method of claim 7, which comprises the step of preparing in ethylene glycol the polymerization catalyst for production of polyester, the polymerization catalyst comprising an inorganic stannous (tin (II)) compound, set forth in claim 1 or 2, and adding the prepared polymerization catalyst, wherein this step is the step of adding stannous glycolate prepared by allowing the inorganic stannous (tin (II)) compound to react with ethylene glycol.

12. The method of claim 7, wherein the polymerization catalyst for production of polyester, set forth in claim 1 or 2, is added in an amount of 10 ppm to 200 ppm based on a weight of the produced polyester.

13. A polyester produced by the method set forth in claim 7.

## INTERNATIONAL SEARCH REPORT

| International application No. |
| --- |
| **PCT/KR2020/004498** |

### A. CLASSIFICATION OF SUBJECT MATTER

*C08G 63/85(2006.01)i, C08G 63/16(2006.01)i, C08G 63/78(2006.01)i*

According to International Patent Classification (IPC) or to both national classification and IPC

### B. FIELDS SEARCHED

Minimum documentation searched (classification system followed by classification symbols)
C08G 63/85; C08G 63/06; C08G 63/137; C08G 63/78; C08L 67/06; G03G 9/08; G03G 9/087; C08G 63/16

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: polyester, catalyst, stannous tin, stannous glycolic acid

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-090673 A (KAO CORP.) 14 June 2018 See claim 1; paragraphs [0001], [0002], [0011]-[0031], [0060]. | 1-10,12,13 |
| Y | | 11 |
| Y | US 3706774 A (GITLITZ, Melvin Hyman) 19 December 1972 See column 3, lines 34-43. | 11 |
| X | JP 2017-097307 A (CANON INC.) 01 June 2017 See paragraphs [0019]-[0029], [0151]. | 1-10,12,13 |
| X | JP 2011-116834 A (TORAY IND INC.) 16 June 2011 See claims 1-2; paragraph [0038]. | 1,2,4 |
| X | JP 2004-217799 A (JAPAN COMPOSITE CO., LTD.) 05 August 2004 See claims 1-3; paragraphs [0016]-[0025], [0057]-[0058]. | 1,2,4 |

☐ Further documents are listed in the continuation of Box C.  ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>05 AUGUST 2020 (05.08.2020) | Date of mailing of the international search report<br><br>**06 AUGUST 2020 (06.08.2020)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br><br>Telephone No. |

Form PCT/ISA/210 (second sheet) (January 2015)

**INTERNATIONAL SEARCH REPORT**
Information on patent family members

| International application No. |
|---|
| **PCT/KR2020/004498** |

| Patent document cited in search report | Publication date | Patent family member | Publication date |
|---|---|---|---|
| JP 2018-090673 A | 14/06/2018 | None | |
| US 3706774 A1 | 19/12/1972 | CA 978689 A | 25/11/1975 |
| | | DE 2204066 A1 | 14/09/1972 |
| | | ES 399378 A1 | 01/12/1974 |
| | | FR 2124371 A1 | 22/09/1972 |
| | | FR 2124371 B1 | 02/09/1977 |
| | | GB 1314807 A | 26/04/1973 |
| | | IT 955126 B | 29/09/1973 |
| | | LU 64700 A1 | 29/06/1972 |
| | | NL 167708 B | 17/08/1981 |
| | | NL 167708 C | 18/01/1982 |
| | | NL 7201073 A | 04/08/1972 |
| | | ZA 72237 B | 25/10/1972 |
| JP 2017-097307 A | 01/06/2017 | None | |
| JP 2011-116834 A | 16/06/2011 | None | |
| JP 2004-217799 A | 05/08/2004 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100184916

- US 6365659 B

**Non-patent literature cited in the description**

- *Anal. Bioanal. Chem.,* 2006, vol. 385, 821

- *Environ. Sci. Technol.,* 2007, vol. 41, 1560